# EUROPÄISCHE PATENTSCHRIFT

(11) **EP 1 505 082 B1**
(45) Veröffentlichungstag und Bekanntmachung des Hinweises auf die Patenterteilung: **29.06.2011**
(21) Anmeldenummer: 04017086.2
(22) Anmeldetag: 20.07.2004
(51) Int. Cl.: C08F 2/06, C08F 283/00, C08G 71/04

(54) **Polymerdispersionen in Polyesterpolyolen**
Polymer dispersion in polyesterpolyole
dispersion d'un polymère dans un polyesterpolyol.

(30) Priorität: 01.08.2003 DE 10335250
(43) Veröffentlichungstag der Anmeldung: 09.02.2005
(73) Patentinhaber: Bayer MaterialScience AG, 51368 Leverkusen (DE)
(72) Erfinder: Nefzger, Hartmut Dr., 50259 Pulheim (DE); Bauer, Erika, 41363 Jüchen (DE); Michels, Erhard Dr., 51061 Köln (DE)

(56) Entgegenhaltungen:
- EP-A- 0 184 761
- EP-A- 0 250 351
- DE-A- 19 850 243
- US-A- 3 371 072

## Beschreibung

Die vorliegende Erfindung betrifft Polymerdispersionen in Polyesterpolyolen, ein Verfahren zu ihrer Herstellung und deren Verwendung zur Herstellung von Polyurethanen, insbesondere mikrozellulären Polyurethanen.

Dispersionen fester, hochmolekularer Polymeren in Polyolen (Polymerpolyole) werden häufig zur Herstellung flexibler Polyurethan-Schaumstoffe eingesetzt. Vorteilhaft ist hierbei beispielsweise, dass die Offenzelligkeit dieser Schaumstoffe erhöht wird und die mechanischen Eigenschaften als Folge der erhöhten Härte verbessert werden. Zu nennen sind in diesem Zusammenhang Weiterreißfestigkeit, Zugspannung und Druckverformungsrest (Compression Set). Hierdurch wird die Einstellung einer verminderten Dichte unter Erhalt der sonst nur mit höherer Dichte erreichbaren Eigenschaften möglich. Dadurch lässt sich eine signifikante Materialeinsparung und somit Kostenreduktion realisieren.

Dispersionen von Polymeren in Polyolen sind literaturbekannt, wobei neben den durch Umsetzung von Olefingruppen enthaltenden Monomeren in Polyolen erhältlichen Dispersionen auch andere Typen von Dispersionen beschrieben sind, z.B. solche, die aus Diaminen und Polyisocyanaten hergestellt werden. Ebenso wird deutlich, dass es sich bei den verwendeten Polyolen meistens um Polyether mit Molmassen von 1000 bis 10000 g/mol handelt, dagegen seltener um Polyesterpolyole. Ein Grund hierfür mag in der vergleichsweise hohen Viskosität liegen, die die Polyesterpolyole selbst und insbesondere auf Polyesterpolyolen basierende Dispersionen im Vergleich zu entsprechenden auf Polyetherpolyol basierenden Systemen aufweisen. Dennoch besteht ein technisches Interesse an den auf Polyesterpolyolen basierten Dispersionen, insbesondere deswegen, weil daraus hergestellte Polyurethansysteme in vielerlei Hinsicht bessere mechanische Eigenschaften aufwiesen als die entsprechenden Polyurethane auf Polyetherbasis.

Für wässrige Systeme mit der Anwendung der hitzehärtbaren Einbrennlacke beschreibt DE-OS 44 27 227 die Verwendung von in Wasser dispergierten, mit Polymerisaten aus olefmischen Monomeren gefüllten Polyesterpolyolen als eine der Systemkomponenten.

Wird als vinylisches Monomer Styrol in derartigen Systemen eingesetzt, so sind auf Grund von dessen im Vergleich zu Acrylnitril niedriger Reaktivität und der auf viele Molekülspezies geringeren Kettenübertragungsgeschwindigkeit ansonsten analoge Dispersionen weniger stabil. Demzufolge erfordert der Einsatz von Styrol als radikalisch polymerisierbares vinylisches Monomer zur Herstellung von Dispersionen auf Polyesterpolyolbasis den Einbau von Pfropfstellen in die bzw. am Ende der Polyestermoleküle. Dies gilt insbesondere, wenn ausschließlich Styrol als vinylisches Monomer eingesetzt wird. Solche Pfropfstellen müssen die Kettenübertragung der radikalisch wachsenden Polymermoleküle unter Bildung kovalenter Bindungen und wenn möglich unter Erhalt der wachsenden Radikalkette gewährleisten.

Einige Beispiele für derartige Modifizierungen sind in EP-A 250 351 aufgeführt. So kann z.B. der Einbau von Maleinsäureanhydrid in die Polyesterpolyolkette diese Funktion ausfüllen. EP-A 0 250 351 offenbart ein Verfahren, bei dem in einem Polyesterpolyol der Molmasse 1000 bis 5000 g/mol mindestens ein ethylenisch ungesättigtes Monomer polymerisiert wird. Das Polyesterpolyol enthält hierbei neben den üblichen Bausteinen Polycarbonsäure und Polyalkohol auch olefinische Bestandteile, insbesondere den Baustein Maleinsäureanhydrid.

Nachteilig am Einbau derartiger, die freie Beweglichkeit der Segmente der Polyesterkette verringernder, ungesättigter Polycarbonsäuren, bzw. Anhydriden ist jedoch die damit verbundene Viskositätserhöhung der eingesetzten Polyesterpolyole bzw. Polyesterpolyolgemische. In gleicher Weise wirkt auch die durch Einbau von Maleinsäure in die Polyesterkette erhöhte Konzentration an polaren Estercarbonylfunktionen viskositätserhöhend. Die erhöhte Viskosität schränkt die Verwendbarkeit der schon per se höherviskosen Polyesterpolyole weiter ein.

Neben diesen Nachteilen zeigt sich in der industriellen Praxis, dass die mit ungesättigten Bausteinen modifizierten Polyesterpolyole in sehr vielen Fällen grobteilige Dispersionen ergeben, die meist mit dem bloßen Auge sichtbare Partikel enthalten und oft schwer filtrierbar sind.

DE 198 50 243 A1 offenbart flüssige Stoffgemische oder Homo- oder Copolymerisate olefinisch ungesättigter Verbindungen, die Polyole abgeleitet von einer schwefelhaltigen Verbindung enthalten.

EP-A-0 184 761 beschreibt Polymere mit einem mittleren Molekulargemisch bis zu 3,000 und einer Polydispersität im Bereich von 1.2 bis 2.5, die ausgehend von Vinylmonomeren hergestellt wurden.

EP-A-0 250 351 offenbart ein Verfahren zur Herstellung von Polydispersionen in hydroxygruppenhaltigen Polyestern.

US-A 3,371,072 beschreibt ein Verfahren zur Herstellung von schwefelhaltigen Harzen.

Aufgabe der vorliegenden Erfindung war es daher, ein verbessertes Verfahren zur Herstellung von Polymerpolyolen auf Polyesterbasis zur Verfügung zu stellen. Es wurde nun gefunden, dass unter Verzicht auf olefinisch ungesättigte Bausteine als Bestandteil des Polyesterpolyols feinteilige, stabile Polymerpolyole erhalten werden, wenn Sulfhydrylgruppierungen enthaltende modifizierte Polyester zur Stabilisierung verwendet werden. Gegenstand der Erfindung sind daher Polymerdispersionen, in Polyesterpolyol die mindestens ein Schwefelatome aufweisendes Polyesterpolyol enthalten.

Gegenstand der Erfmdung ist auch ein Verfahren zur Herstellung der erfindungsgemäßen Polymerdispersionen in Polyesterpolyol durch radikalische Polymerisation olefinisch ungesättigter Monomere in Gegenwart eines Schwefelatome aufweisenden Polyesterpolyols ohne olefinisch ungesättigte Gruppen und gegebenenfalls weiterer Polyesterpolyole ohne olefinisch ungesättigte Gruppen. Bevorzugt weist das Schwefelatome aufweisende Polyesterpolyol Sulfhydrylgruppen (-SH) auf. In einer erfindungsgemäßen Variante wird ein Basis-Polyesterpolyol im Gemisch mit einem sulfhydrylmodifizierten Polyesterpolyol eingesetzt. In einer anderen Variante wird insgesamt nur ein einziges Polyesterpolyol eingesetzt, bei dem die Sulfhydrylgruppen im Basis-Polyesterpolyol eingebaut sind.

Das Basis-Polyesterpolyol wird aus Komponenten hergestellt, die keine olefinischen Bestandteile aufweisen. Basis-Polyesterpolyole sind Hydroxylendgruppen aufweisende Polykondensationsprodukte aus Diolen und Dicarbonsäuren bzw. deren Anhydriden oder niedermolekularen Estern oder Halbestern, bevorzugt solchen mit monofunktionellen Alkoholen wie Methanol, Ethanol, 1-Propanol, 2-Propanol, 1-Butanol und 2-Butanol.

Beispiele für geeignete Diole sind Ethylenglykol, 1,2-Propandiol, 1,3-Propandiol, 2-Methyl-1,3-propandiol, 1,4-Butandiol, 1,5-Pentandiol, 3-Methyl-1,5-pentandiol, 1,6-Hexandiol, 1,8-Octandiol, 1,10-Decandiol, Neopentylglykol, Diethylenglykol, Triethylenglykol, Tetraethylenglykol usw. Geeignet sind auch Polyetherpolyole mit zahlenmittleren Molmassen von 250 bis 4500 g/mol, insbesondere solche, die überwiegend von 1,2-Propylenoxid abgeleitete Einheiten enthalten. Entsprechend sind auch Etheroligomere des Butandiols wie Dibutylenglykol, Tributylenglykol, bzw. entsprechende, durch ringöffnende Polymerisation des Tetrahydrofurans erhältliche Diole mit zahlenmittleren Molmassen von 240 bis 3000 g/mol als Diole einsetzbar. Entsprechende Verbindungen des 1,6-Hexandiols, Di- und Trihexylenglykol, bzw. Oligomerengemische, die durch azeotrope Verätherung des 1,6-Hexandiols erhalten werden können, sind ebenfalls geeignet.

Daneben können auch bis zu 5 Gew.-% höherfunktionelle Polyole mitverwendet werden, beispielsweise 1,1,1-Trimethylolpropan, Glycerin oder Pentaerythrit, sowie auf diesen gestartete Polypropylenoxid- und Polyethylenoxidpolyole mit zahlenmittleren Molmassen von 250 bis 4500 g/mol.

Als Dicarbonsäuren ohne Olefingruppierung können aliphatische und aromatische Verbindungen einzeln oder im Gemisch verwendet werden. Beispielhaft seien genannt: Bernsteinsäure, Glutarsäure, Adipinsäure, Pimelinsäure, Suberinsäure, Sebacinsäure, Phthalsäure, Isophthalsäure, Terephthalsäure. Daneben können auch deren Anhydride sowie deren Ester oder Halbester mit niedermolekularen, insbesondere monofunktionellen Alkoholen eingesetzt werden.

Analog können auch Ester von cyclischen Hydroxylcarbonsäuren, bevorzugt solche, die aus e-Caprolacton hergestellt werden können, eingesetzt werden.

Entsprechend können auch Polyester der Kohlensäure, also Polycarbonatpolyole verwendet oder mitverwendet werden. Diese können hergestellt werden durch Umesterung von Dimethylcarbonat oder Diphenylcarbonat mit Diolen und Triolen, sowie durch Umesterung mit hydroxylendständigen Oligoester- und Oligoetherdiolen mit zahlenmittleren Molmassen von 200 bis 1000 g/mol.

Die erfindungsgemäß zu verwendenden Polyesterpolyole weisen eine mittlere Hydroxylfunktionalität von 1,8 bis 3, bevorzugt 1,85 bis 2,7, besonders bevorzugt 1,9 bis 2,5 auf, sowie eine zahlenmittlere Molmasse von 1000 bis 5000, bevorzugt 1300 bis 4800, besonders bevorzugt 1600 bis 4500 g/mol auf.

Werden mehrere Polyesterpolyole verwendet, so beziehen sich die im obigen Absatz genannten Grenzen bzgl. der Molmasse auf das Polyesterpolyolgemisch. In diesem Fall kann selbstverständlich das zahlenmittlere Molekulargewicht wenigstens einer der Einzelkomponenten auch außerhalb der angegebenen Grenzen, z.B. im Bereich von 450 bis 1600 g/mol liegen.

Sulfhydryl-modifizierte Polyesterpolyole enthalten mindestens eine Sulfhydrylgruppe -SH. Diese kann beispielsweise durch Kondensation in ein hydroxylgruppen-terminiertes Polyesterpolyol eingebracht werden. Eine bevorzugte Verfahrensvariante hierfür ist die sogenannte Azeotropveresterung, bei der ein hydroxylgruppen-terminiertes Polyesterpolyol mit einer Sulfhydrylgruppen enthaltenden Carbonsäure und/oder Sulfhydrylgruppen enthaltenden Carbonsäurederivaten in Gegenwart eines Schleppmittels sowie ggf. eines Veresterungs- bzw. Umesterungskatalysators umgesetzt wird.

Als Ausgangskomponente für Sulfhydryl-modifizierte Polyesterpolyole kommen alle Basis-Polyesterpolyole in Frage. Bevorzugt sind solche, die mindestens eine Aufbaukomponente enthalten, deren Funktionalität größer als 2 ist.

Sulfhydrylgruppen enthaltende Carbonsäuren und Carbonsäurederivate sind durch die folgende allgemeine Formel charakterisiert:

(HS)ₘ - R¹ - (COOR²)ₙ (I)

wobei
- m, n: unabhängig voneinander einen Wert ≥1 annehmen,
- R¹: eine Alkylen- oder Alkylidengruppierung mit 1 bis 11 C-Atomen, bevorzugt 1 bis 5 C-Atomen, besonders bevorzugt 1 C-Atom, und
- R²: eine Alkylgruppe mit 1 bis 5 C-Atomen, bevorzugt 1 bis 2 C-Atomen, oder ein Wasserstoffatom repräsentiert.

Beispiele sind Mercaptoessigsäure (m = n = 1, R¹ = CH₂, R² = H), Mercaptopropionsäure (m = n = 1, R¹ = (CH₂)₂, R² = H), Methylthioglykolat (m = n = 1, R¹ = CH₂, R² = CH₃), Thiomilchsäure (m = n = 1, R¹ = CH(CH₃), R² = H), sowie 2,3-Dithio-meso-Weinsäure (m = n = 2, R¹ = CHCH, R² = H). Bevorzugt sind Mercaptoessigsäure und Mercaptopropionsäure.

Als Schleppmittel für die Umsetzung kommen alle organischen Lösungsmittel mit Siedepunkten von 60 bis 160°C in Frage. Bevorzugt sind Toluol, Benzol, Xylol oder Dioxan. Der Anteil des Schleppmittels wird so gewählt, dass die Temperatur des Reaktionsgemisches 95°C bis 180°C, bevorzugt 100°C bis 160°C beträgt, wobei als Druck üblicherweise Normaldruck gewählt wird. Es kann aber auch verminderter Druck (1012 bis 200 mbar), sowie erhöhter Druck (1 bis 1,5 bar) angewendet werden.

Als Veresterungs- bzw. Umesterungskatalysatoren können die dem Fachmann bekannten Verbindungen verwendet werden, z.B. starke Protonensäuren wie p-Toluolsulfonsäure oder Metallatome enthaltende Verbindungen wie Titantetrabutylat, Zinndichlorid usw.

In einer anderen Variante wird das sulfhydryl-modifizierte Polyesterpolyol durch Polykondensation aus bifunktionellen Carbonsäuren, die gegebenenfalls geringe Anteile höherfunktioneller Carbonsäuren enthalten, und bifunktionellen Alkoholen, die gegebenenfalls geringe Anteile höherfunktioneller Alkohole, z.B. Triole, enthalten, sowie Sulfhydrylgruppen enthaltenden Carbonsäuren bzw. Carbonsäurederivaten gemäß Formel I hergestellt.

Erfindungsgemäß enthält das nach den beschriebenen Verfahren hergestellte sulfhydryl-modifizierte Polyesterpolyol weniger als 10 Gew.-%, bevorzugt 0,1 bis 10 Gew.-%, besonders bevorzugt 2 bis 7 Gew.-% Schwefel.

Bezogen auf alle Polyesterpolyol-Komponenten beträgt der Anteil an sulfhydryl-modifiziertem Polyesterpolyol im Basis-Polyesterpolyolgemisch weniger als 5 Gew.-%, bevorzugt weniger als 3 Gew.-%, besonders bevorzugt weniger als 1 Gew.-%.

Weiterhin können die Basis-Polyesterpolyole auch dadurch modifiziert werden, dass niedermolekulare Diole oder Diolgemische mit zahlenmittleren Molmassen von 62 bis 400 g/mol, die keine Estergruppen tragen, den verwendeten Estern zugemischt werden. Diese Abmischung kann auch nach beendeter radikalischer Polymerisation zur an sich fertigen Dispersion erfolgen.

Beispiele geeigneter radikalisch polymerisierbarer Vinyl-Monomere sind Styrol, alpha-Methylstyrol, Ethylstyrol, Vinyltoluol, Divinylbenzol, Isopropylstrol, Chlorostyrol, Butadien, Isopren, Pentadien, Acrylsäure, Methacrylsäure, Methacrylsäuremethylester, Vinylacetat, Acrylnitril, Methylvinylketon oder Kombinationen dieser Verbindungen. Bevorzugt eingesetzt werden Styrol, alpha-Methylstyrol, Acrylnitril, Methacrylnitril, Methacrylsäurealkylester mit C₁-C₃₀-Alkylresten (z.B. Methyl-, Ethyl-, Butyl-, Hexyl-, Dodecyl- usw). Besonders bevorzugt sind Styrol und Acrylnitril, wobei das Styrol bevorzugt in einem Anteil von mehr als 75 Gew.-% verwendet wird, besonders bevorzugt von mehr als 90 Gew.-%.

Der Anteil dieser erfindungsgemäß zu verwendenden radikalisch polymeriserbaren Vinyl-Monomeren am Gesamtansatz, d.h. der Füllgrad der fertigen Dispersion, beträgt erfindungsgemäß 2 bis 55 Gew.-%, bevorzugt 4 bis 40 Gew.-%, besonders bevorzugt 5 bis 33 Gew.-%. Der Füllgrad ist durch Nachverdünnung mit einem zweiten Basis-Polyesterpolyol einstellbar.

In einer bevorzugten Ausführungsform werden als Basis-Polyesterpolyol zwei unterschiedliche Polyesterpolyole eingesetzt, die sich mindestens bezüglich ihres zahlenmittleren Molekulargewichtes unterschieden, wobei das Polyesterpolyol mit dem kleineren Molekulargewicht erst dann zugemischt wird, wenn die radikalische Polymerisation des vinylischen Monomeren im Gemisch von Polyesterpolyol mit höherem Molekulargewicht und sulfhydryl-modifiziertem Polyesterpolyol beendet ist.

Für die Initiierung der radikalischen Polymerisation werden an sich bekannte Radikalstarter verwendet. Beispiele aus der Gruppe der Azo-Initiatoren sind alpha, alpha'-Azo-2-Methylbutyronitril, alpha,alpha'-Azo-2-Heptonitril, 1,1'-Azo-1-cyclohexancarbonitril, Dimethyl-alpha,alpha'azo-isobutyrat, 4,4'-Azo-4-cyanopentansäure, Azo-bis(2-methylbutyronitril), Azo-bis-isobutyronitril. Aus der Gruppe der Peroxide, Persulfate, Perborate, Percarbonate seien beispielhaft genannt: Dibenzoylperoxid, Acetylperoxid, Benzyolhydroperoxid, t-Butylhydroperoxid, Di-t-Butylperoxid, 2-Ethylhexansäure-tert.-butylperester, Diisopropylperoxydicarbonat, usw.

Die Polymerisation wird typischerweise in Anwesenheit eines Lösungsmittels ausgeführt, kann aber auch ohne Lösungsmittel bewerkstelligt werden. Als Lösungsmittel können beispielsweise eingesetzt werden: Benzol, Toluol, Xylol, Acetonitril, Hexan, Heptan, Dioxan, Ethylacetat, N,N-Dimethylformamid, N,N-Dimethylacetamid, etc. Bevorzugt sind Benzol, Xylol und Toluol.

Gegenstand der Erfindung sind auch die nach den erfindungsgemäßen Verfahren erhaltenen Polymerdispersionen in Polyesterpolyol. Die erhaltenen Produkte sind weiße Dispersionen, die ein hochmolekulares Polymer oder Copolymer, ein konventionelles, bei Raumtemperatur festes oder bevorzugt flüssiges Polyesterpolyol und ein zur Phasenstabilisierung notwendiges weiteres modifiziertes Polyesterpolyol enthalten. Sie können beispielsweise bei einem Füllgrad von 25 Gew.-% Polystyrol und einer OH-Zahl von 50 bis 60 Viskositäten von 15 000 bis 35 000 mPas bei 25°C und 3000 bis 8000 mPas bei 50°C aufweisen. Die Viskosität ist proportional zur Viskosität des verwendeten Basis-Polyesterpolyols und umgekehrt proportional zur OH-Zahl.

Die erfindungsgemäß hergestellten Polymerpolyole eignen sich zur Herstellung von Polyurethanen, bzw. Polyurethan-Werkstoffen, insbesondere zur Herstellung mikrozellularer Polyurethan-Elastomere, wie sie für die Herstellung von Schuhsohlen Verwendung finden. Gegenstand der Erfindung sind auch Schuhsohlen enthaltend das Umsetzungsprodukt der erfindungsgemäßen Polymerdispersionen in Polyesterpolyol mit Polyisocyanaten oder Polyisocyanat-Prepolymeren.

Mit den erfindungsgemäßen Polymerdispersionen in Polyesterpolyol lassen sich Polyurethane erhalten, die gegenüber Polyurethanen, die ohne Polymerdispersion hergestellt werden, bei gleicher Dichte eine größere Härte aufweisen. Wenn neben der Dichte auch die Härte konstant gehalten werden soll, kann bei Einsatz der erfindungsgemäßen Polymerdispersionen in Polyesterpolyol mit einer deutlich verringerten Menge an Polyisocyanat gearbeitet werden.

### Beispiele

A.) Herstellung der Basis-Polyesterpolyole
B.) Herstellung der Sulfhydryl-modifizierten Polyesterpolyole
C.) Herstellung erfindungsgemäßcr Dispersionen
D.) Vergleichsbeispiele
E.) Verarbeitungsbeispiele

### A.) Herstellung der Basis-Polyesterpolyole

### A.1. Basis-Polyesterpolyol mit hohem Molekulargewicht

2779 g (26,22 Mol) Diethylenglykol, 813 g (13,12 Mol) Ethylenglykol und 5452 g (37,12 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 27,8 mg KOH/g und die Säurezahl zu 0,8 mg KOH/g..

### A.2. Basis-Polyesterpolyol mit niedrigem Molekulargewicht

3177 g (29,97 Mol) Diethylenglykol, 932 g (15,03 Mol) Ethylenglykol und 5256 g (36 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 120,1 mg KOH/g und die Säurezahl zu 0,3 mg KOH/g.

### B.) Herstellung der Sulfhydryl-modifizierten Polyesterpolyole

### B.1. Aus den Einzelkomponenten mit Mercaptoessigsäure hergestellter Zusatzstoff

134 g (1 Mol) 1,1,1-Trimethylolpropan (TMP), 370 g (ca. 1 Mol) eines Polyethylenglykols mit einer OH-Zahl von 228 (P 400, Fluka, CH-8471 Buchs), 146 g (1 Mol) Adipinsäure und 92 g (1 Mol) Mercaptoessigsäure wurden mit 100 g Toluol und 0,7 g p-Toluolsulfonsäure vermischt. Bei 140-145°C wurden azeotrop 54 g (3 Mol) Wasser am Wasserabscheider abgeschieden. Das Toluol wurde anschließend abdestilliert. Die OH-Zahl betrug 202 mg KOH/g, die Säurezahl wurde zu 26 mg KOH/g und die Viskosität zu 820 mPas (25°), bzw. 190 mPas (50°C) bestimmt.

### B.2. Durch Umsetzung eines Polyesterpolyols mit Mercaptoessigsäure hergestellter Zusatzstoff

580 g (0,2 Mol) eines Polyadipates mit den Aufbaukomponenten Diethylenglykol und TMP mit einer zahlenmittleren Molmasse von 2900 g/mol und einer Funktionalität von ca. 3 (Desmophen^{®} 2300, Bayer AG), 18,4 g (0,2 Mol) Mercaptoessigsäure und 0,6 g p-Toluolsulfonsäure wurden in 100 ml Toluol gelöst. Bei 140-145°C wurden azeotrop 3,6 g (0,2 Mol) Wasser am Wasserabscheider abgeschieden. Das Toluol wurde anschließend abdestilliert. Die OH-Zahl betrug 47,7 mg KOH/g, die Säurezahl wurde zu 14,8 mg KOH/g und die Viskosität zu 20850 mPas (25°), bzw. 4020 mPas (50°C) bestimmt.

### C.) Herstellung erfindungsgemäßer Polymerdispersionen in Polyesterpolyol

**Tabelle 1: Übersicht der erfindungsgemäßen Beispiele**

| Beispiel | Anzahl Basis-Polyesterpolyole | | Zugabe kurzkettiges Diol | | Sulfhydryl-gruppen aufweisender polyester |
|---|---|---|---|---|---|
| | Ein | Zwei | in Vorlage | in fertige Dispersion | |
| C.1. | X | | X | | B.1. |
| C.2. | X | | | X | B.1. |
| C.3. | X | | X | | B.2. |
| C.4. | | X | | | B.2. |

### C.1. Polyesterpolyol aus B.1. als Zusatzstoff, Zumischung von Diethylenglykol vor der Polymeristion des vinylischen Monomeren

476 g eines Polyadipates (Desmophen^{®} 2003E, Bayer AG) mit einer Hydroxylzahl von 56 mg KOH/g wurden mit 3 g des unter B.1. hergestellten, Sulfhydrylgruppen enthaltenden Polyesterpolyols, 100 g Toluol, 27 g Diethylenglykol und 1 g Azo-bis(2-methylbutyronitril) verrührt. Man leitete für 20 min. einen schwachen Stickstoffstrom durch die Lösung, gab 80 g Styrol zu und erwärmte unter Rühren im Verlauf von 30 min. auf 80°C. Nach 20 min. bei 80°C wurde die Temperatur in weiteren 30 min. auf 120°C erhöht.

Eine zuvor bereite Lösung aus 600 g eines Polyadipates (Desmophen® 2003E, Bayer AG) mit einer Hydroxylzahl von 56 mg KOH/g, 14,3 g des in Beispiel B.1. hergestellten, Sulfhydrylgruppen enthaltenden Polyesterpolyols, 200g Toluol, 5,4 g Azo-bis(2-methylbutyronitril) und 420 g Styrol wurden im Verlauf von 2 Std. bei einer Rührerdrehzahl von zunächst 300 U/min. zudosiert, wobei die Drehzahl nach 20 min. auf 350 U/min. und nach weiteren 40 min. auf 400 U/min. erhöht wurde.

Nach Ende dieser Zudosierung ließ man 5 min. nachreagieren.

Eine weitere zuvor bereitete Lösung aus 38 g eines Polyadipates (Desmophen® 2003E, Bayer AG) mit einer Hydroxylzahl von 56 mg KOH/g, 3,5 g des in Beispiel B.1. hergestellten, Sulfhydrylgruppen enthaltenden Polyesterpolyols, 50 g Toluol und 1 g Azo-bis(2-methylbutyronitril) wurde danach innerhalb von 30 min. zudosiert. Man ließ nach beendeter Zugabe für 2 Std. bei 120°C nachreagieren.

Zur Aufarbeitung wurde an das Reaktionsgemisch zunächst Wasserstrahlvakuum angelegt, um das Lösungsmittel und eventuell nicht umgesetztes Styrol weitgehend zu entfernen. Zur Vervollständigung legte man Ölpumpenvakuum an, wobei nach 2 Std. bei 0,5 mbar sowohl Styrol als auch Toluol weitestgehend entfernt waren.

Der noch warme Ansatz wurde über ein 200µm Sieb innerhalb von 4 min rückstandsfrei und ohne Druck anzulegen mit Hilfe einer beheizbaren Filternutsche abfiltriert.

Die OH-Zahl der fertigen Dispersion betrug 53,1 mg KOH/g, die Säurezahl 1 mg KOH/g, die Viskosität betrug 24600 mPas (25°C) bzw. 5060 mPas (50°C). Der Füllgrad der Dispersion betrug 26 Gew.-%.

### C.2. Polyesterpolyol aus B.1. als Zusatzstoff, Zumischung von Diethylenglykol zur fertigen Dispersion.

Vorlage:
   476 g Polyadipat, OHZ 50 mg KOH/g,
      (Desmophen® DE 2100, Bayer AG)
   3,0 g Polyesterpolyol aus Beispiel B.1.
   100 g Toluol
   80 g Styrol
   1,0 g Azo-bis(2-methylbutyronitril)
wurden bei 115°C vorgelegt. Analog Beispiel. C.1. wurden folgende Gemische zudosiert:
Dosierung 1:
   600 g Polyadipat, OHZ 50 mg KOH/g,
      (Desmophen® DE 2100, Bayer AG)
   14,3 g Polyesterpolyol aus Beispiel B.1.
   200 g Toluol
   420 g Styrol
   5,4 g Azo-bis(2-methylbutyronitril)
Dosierung 2:
   38 g Polyadipat, OHZ 50 mg KOH/g,
      (Desmophen® DE 2100, Bayer AG)
   3,5 g Polyesterpolyol aus Beispiel B.1.
   50 g Toluol
   0,6 g Azo-bis(2-methylbutyronitril)
Aufarbeitung siehe C.1.

Die erhaltene Dispersion wurde mit 43 g Diethylenglykol vermischt, dann über ein 200µm Sieb filtriert; sie war phasenstabil und wies eine Viskosität von 35200 mPas (25°C) bzw. 7310 mPas (50°C) auf; Füllgrad ca. 26 Gew.-%; OH-Zahl: 58,6 mg KOH/g. Die Säurezahl betrug 0,8 mg KOH/g.

### C.3. Polvesterpolyol aus B.2. als Zusatzstoff

Vorlage:
   476 g Polyadipat, OHZ 50 mg KOH/g,
      (Desmophen® DE 2100, Bayer AG)
   3,0 g Polyesterpolyol aus Beispiel B.2.
   100 g Toluol
   80 g Styrol
   1,0 g Azo-bis(2-methylbutyronitril)
   43 g Diethylenglykol
   wurden bei 115°C vorgelegt und folgende Gemische zudosiert, weitere Details siehe Beispiel C.1.:
Dosierung 1:
   600 g Polyadipat, OHZ 50 mg KOH/g,
      (Desmophen^{®} DE 2100, Bayer AG)
   14,3 g Polyesterpolyol aus Beispiel B.2.
   200 g Toluol
   420 g Styrol
   5,4 g Azo-bis(2-methylbutyronitril)
Dosierung 2:
   38 g Polyadipat, OHZ 50 mg KOH/g,
      (Desmophen^{®} DE 2100, Bayer AG)
   3,5 g Polyesterpolyol aus Beispiel B.2.
   50 g Toluol
   0,6 g Azo-bis(2-methylbutyronitril)
Aufarbeitung siehe C.1.

Die erhaltene Dispersion war über ein 200µm Sieb filtrierbar, phasenstabil und wies eine Viskosität von 34900 mPas bei 25°C bzw. von 7230 mPas bei 50°C auf. Füllgrad ca. 25,5 Gew.-%. OH-Zahl: 54,8 mg KOH/g. Säurezahl: 0,6 mg KOH/g.

### C.4. Polyesterpolyol aus B.2. als Zusatzstoff, Verdünnung mit Polyesterpolyol mit niedrigerem Molekulargewicht

Vorlage:
   476 g Polyesterpolyol aus Beispiel A.1., OH-Zahl 27,8 mg KOH/g.
   3,0 g Polyesterpolyol aus Beispiel B.2.
   100 g Toluol
   80 g Styrol
   1,0 g Azo-bis(2-methylbutyronitril)
   wurden bei 115°C vorgelegt und folgende Gemische zudosiert, weitere Details siehe Beispiel C.1.:
Dosierung 1:
   600 g Polyesterpolyol aus Beispiel A.1., OH-Zahl 27,8 mgKOH/g.
   21 g Polyesterpolyol aus Beispiel B.2.
   200 g Toluol
   800 g Styrol
   6,4 g Azo-bis(2-methylbutyronitril)
Dosierung 2:
   38 g Polyesterpolyol aus Beispiel A.1., OH-Zahl 27,8 mgKOH/g.
   4 g Polyesterpolyol aus Beispiel B.2.
   100 g Toluol
   0,6 g Azo-bis(2-methylbutyronitril)
   Die erhaltene Dispersion enthielt zu diesem Zeitpunkt ca. 40 Gew.-% Feststoff.
Dosierung 3: 1119 g Polyesterpolyol aus Beispiel A.2., OH-Zahl 120,1 mg KOH/g.
Aufarbeitung siehe C.1.

Die erhaltene Dispersion war über ein 100µm Sieb filtrierbar, phasenstabil und wies eine Viskosität von 27530 mPas bei 25°C bzw. von 5860 mPas bei 50°C auf. Füllgrad ca. 23,1 Gew.-%. OH-Zahl: 57,8 mg KOH/g. Säurezahl: 0,3 mg KOH/g.

### D.) Vergleichsbeispiele

### D.1. Synthese von Doppelbindungen enthaltenden Zusatzstoffen

### D.1.1. Herstellung eines Acrylat-Endgruppen enthaltenden Polyetherpolyols

4000 g eines auf TMP gestarteten Polyoxypropylenpolyols mit einer OH-Zahl von 28 mg KOH/g und 1 g Titantetraisobutylat wurden bei 50°C langsam mit 144 g Acrylsäuremethylester versetzt, wobei Methanol bei erhöhter Temperatur aus dem Reaktionsgemisch entfernt wurde.

Die OH-Zahl des Acrylat-Endgruppen enthaltenden Polyetherpolyols betrug 21 mg KOH/g; die Viskosität 1700 mPas bei 25°C.

### D.1.2. Herstellung eines Maleinsäure enthaltenden Polyesterpolyols

1148 g (7,65 Mol) Triethylenglykol und 583 g (5,95 Mol) Maleinsäureanhydrid, sowie 0,5 g Hydrochinon wurden unter Zinndichloridkatalyse (40 mg) in einer Schmelzpolykondensation bei 200°C unter Wasserabspaltung, zuletzt im Vakuum umgesetzt. Die OHZ betrug 93,1 mg KOH/g; die Säurezahl wurde zu 0,9 mg KOH/g bestimmt, die Viskosität betrug 1070 mPas bei 75°C.

### D.1.3. Herstellung eines Maleinsäure enthaltenden Polyestewolyols

5548 g (38 Mol) Adipinsäure, 196 g (2 Mol) Maleinsäureanhydrid, 1728 g (27,87 Mol) Ethylenglykol und 1728 g (16,3 Mol) Diethylenglykol (16,3 Mol) wurden unter Zinndichloridkatalyse (200 mg) in einer Schmelzpolykondensation bei 200°C unter Wasserabspaltung, zuletzt im Vakuum umgesetzt. Die OHZ betrug 55 mg KOH/g; die Säurezahl wurde zu 0,2 mg KOH/g bestimmt. Viskosität bei 25°C: 12550 mPas.

### D.2. Verwendung von Doppelbindungen enthaltenden Zusatzstoffen bei der Herstellung polymergefüllter Dispersionen

### D.2.1. Verwendung des Zusatzstoffes aus Beispiel D.1.1.

Vorlage:
   476 g Polyadipat, OHZ 56 mgKOH/g
      (Desmophen^{®} DE 2002H, Bayer AG,)
   8,7 g Zusatzstoff aus Beispiel D.1.1.
   200 g Toluol
   80 g Styrol
   0,6 g Azo-bis(2-methylbutyronitril)
   wurden bei 115°C vorgelegt und folgende Gemische zudosiert, weitere Details siehe Beispiel C.1.:
Dosierung 1:
   538 g Polyadipat, OHZ 56 mgKOH/g
      (Desmophen^{®} DE 2002H, Bayer AG,)
   43 g Zusatzstoff aus Beispiel D.1.1.
   200 g Toluol
   738 g Styrol
   5,4 g Azo-bis(2-methylbutyronitril)
Dosierung 2:
   100 g Polyadipat, OHZ 56 mgKOH/g
      (Desmophen^{®} DE 2002H, Bayer AG,)
   10,4 g Zusatzstoff aus Beispiel D.1.1.
   50 g Toluol

Die erhaltene Dispersion war instabil; es bildeten sich zwei Phasen. Füllgrad ca. 40 Gew.-%.

### D.2.2. Verwendung des Zusatzstoffes aus Beispiel D.1.2.

Vorlage:
   476 g Polyesterpolyol mit einem molaren Verhältnis Ethylenglykol:
      Diethylenglykol von 1:1, OH-Zahl 98,1 mg KOH/g
   8,7 g Zusatzstoff aus Beispiel D.1.2.
   100 g Toluol
   80 g Styrol
   0,6 g Azo-bis(2-methylbutyronitril)
   33 g Isopropanol
   wurden bei 115°C vorgelegt und folgende Gemische zudosiert, weitere Details siehe Beispiel C.1.:
Dosierung 1:
   600 g Polyesterpolyol mit einem molaren Verhältnis Ethylenglykol:
      Diethylenglykol von 1:1, OH-Zahl 98,1 mg KOH/g
   43 g Zusatzstoff aus Beispiel D.1.2.
   200 g Toluol
   533 g Styrol
   5,4 g Azo-bis(2-methylbutyronitril)
Dosierung 2:
   38 g Polyesterpolyol mit einem molaren Verhältnis Ethylenglykol:
      Diethylenglykol von 1:1, OH-Zahl 98,1 mg KOH/g
   10,4 g Zusatzstoff aus Beispiel D.1.2.
   0,6 g Azo-bis(2-methylbutyronitril)
   50 g Toluol

Die erhaltene Dispersion war nicht über ein 200µm Sieb filtrierbar.

### D.2.3. Verwendung des Zusatzstoffes aus Beispiel D.1.3.

Vorlage:
   830 g Polyesterpolyol mit einem molaren Verhältnis Ethylenglykol:
      Butandiol:Diethylenglykol von 2:1:1, OH-Zahl 60 mg KOH/g
   50 g Toluol
   wurden bei 120°C vorgelegt und folgendes Gemisch zudosiert, weitere Details siehe Beispiel C.1.:
Dosierung 1:
   353 g Polyesterpolyol mit einem molaren Verhältnis Ethylenglykol:
      Butandiol:Diethylenglykol von 2:1:1, OH-Zahl 60 mg KOH/g
   62 g Zusatzstoff aus Beispiel D.1.3.
   523 g Styrol
   13 g Azo-bis(2-methylbutyronitril)
   200 g Styrol

Das Reaktionsprodukt war nicht über ein 200µm Sieb filtrierbar.

### E. ) Herstellung von PUR- Formkörpern

Die Herstellung der Polyurethan-Prüfkörper erfolgte, indem man die Isocyanatgruppen enthaltende A-Komponente bei 40°C in einer Niederdruck-Verarbeitungsmaschine mit der Polyol enthaltenden B-Komponente bei 45°C vermischte, die Mischung in eine auf 50°C temperierte Aluminiumform (Größe 200*200*10 mm) eindosierte, die Form schloss und nach 4 Minuten das Elastomer entformte.

Die Härte (Shore A) der so hergestellten Elastomer-Platten wurde nach 24 h Lagerung gemäss DIN 53 505 gemessen.

### E.1. Verarbeitung der Polymerdispersion aus Beispiel C.4

Ein NCO-terminiertes Prepolymer (A) auf Basis von 4,4'-MDI und einem Polyadipat (Adipinsäure, Ethylenglykol, Butandiol, OH-Zahl 56) mit einem NCO-Gehalt von 19 Gew.-% (Desmodur® PM 53, Bayer AG) wurde mit einer Mischung (B1) aus
49,70 Gew.-% Polyesterpolyol auf Basis Adipinsäure, Ethylenglykol und Diethylenglykol mit OHZ 56 (Bayflex^{®} 2003 E, Bayer AG)
36,46 Gew.-% Polymerdispersion aus Beispiel C.4.
11,40 Gew.-% Ethandiol
0,82 Gew.-% Triethanolamin
0,46 Gew.-% Diazabicyclo[2.2.2]octan
1,07 Gew.-% Wasser
0,09 Gew.-% Zellstabilisator (Dabco^{®} DC 193, Air Products)
wie beschrieben verarbeitet. Das Mischungsverhältnis der Komponenten (B) zu (A) betrug 100:118 Gew.-Teile, die resultierende Freischaumdichte 145 kg/m³. Die nach 4 min Formstandzeit entformbaren Prüfkörper mit einer Formteildichte von 350 kg/m³ wiesen eine Shore A-Härte von 71 auf.

### E.2. Verarbeitung der Polymerdispersion aus Beispiel C.4

Das Prepolymer (A) wurde mit einer Mischung (B2) aus
51,52 Gew.-% Polyesterpolyol Bayflex^{®} 2003 E
37,10 Gew.-% Polymerdispersion aus Beispiel C.4.
8,90 Gew.-% Ethandiol
0,82 Gew.-% Triethanolamin
0,46 Gew.-% Diazabicyclo[2.2.2]octan
1,07 Gew.-% Wasser
0,13 Gew.-% Zellstabilisator (Dabco^{®} DC 193, Air Products)
wie beschrieben verarbeitet. Das Mischungsverhältnis der Komponenten (B2) zu (A) betrug 100:102 Gew.-Teile, die resultierende Freischaumdichte 153 kg/m³. Die nach 4 min Formstandzeit entformbaren Prüfkörper mit einer Formteildichte von 350 kg/m³ weisen eine Shore A-Härte von 55 auf.

### E.3. Vergleichsbeispiel

Das Prepolymer (A) wurde mit einer Mischung (B3), bestehend aus
86,16 Gew.-% Polyesterpolyol Bayflex^{®} 2003 E
11,40 Gew.-% Ethandiol
0,82 Gew.-% Triethanolamin
0,46 Gew.-% Diazabicyclo[2.2.2]octan
1,07 Gew.-% Wasser
0,09 Gew.-% Zellstabilisator (Dabco^{®} DC 193, Air Products)
wie beschrieben verarbeitet. Das Mischungsverhältnis der Komponenten (B3) zu (A) betrug 100:117 Gew.-Teile, die resultierende Freischaumdichte 150 kg/m³. Die nach 4 min Formstandzeit entformbaren Prüfkörper mit einer Formteildichte von 350 kg/m³ wiesen eine Shore A-Härte von 56 auf.

Wie das Vergleichsbeispiel zeigt, werden mit einer konventionellen Rezeptur, deren PolyolKomponente 11,40 Gew.-% Ethandiol enthält, bei einem Mischungsverhältnis Polyol : Polyisocyanat von 100 : 117 Materialien mit einer Shore A-Härte von 56 erhalten. Wird als B-Komponente bei konstantem Ethandiol-Anteil ein 49,7:36,5 Gemisch des konventionellen Polyols mit der erfindungsgemäßen Polymerdispersion aus Beispiel C.4. eingesetzt, wird bei nahezu gleichem Mischungsverhältnis mit der Polyol : Polyisocyanat von 100 : 118 ein Material mit einer um 15 Shore A-Einheiten erhöhten Härte erhalten (Beispiel E.1.). Durch Verringerung des Ethandiolanteils wird wieder eine Shore A-Härte von 56 erreicht. Dies geht einher mit einem veränderten Mischungsverhältnis Polyol : Polyisocyanat von 100 : 102 (Beispiel E.2.)

Die Beispiele machen deutlich, dass die Mitverwendung der erfindungsgemäßen Polymerdispersionen in Polyesterpolyol bei unveränderter Dichte zu einer Härtesteigerung führt. Wenn neben der Dichte auch die Härte konstant gehalten werden soll, kann mit einer deutlich verringerten Menge an Polyisocyanat gearbeitet werden.

## Patentansprüche

1. Polymerdispersion in Polyesterpolyol, enthaltend mindestens ein Schwefelatome aufweisendes Polyesterpolyol.

2. Verfahren zur Herstellung von Polymerdispersionen durch radikalische Polymerisation olefinisch ungesättigter Monomere in Gegenwart eines Schwefelatome aufweisenden Polyesterpolyols ohne olefinisch ungesättigte Gruppen und gegebenenfalls weiterer Polyesterpolyole ohne olefinisch ungesättigte Gruppen.

3. Verfahren gemäß Anspruch 2, zur Herstellung von Polymerdispersionen in Polyesterpolyolen, bei dem das Schwefelatome aufweisende Polyesterpolyol Sulfhydrylgruppen (-SH) aufweist.

4. Verfahren gemäß Anspruch 3, bei dem als Schwefelatome aufweisendes Polyesterpolyol ein durch Umsetzung von Polyesterpolyolen mit Verbindungen der Formel
(HS)ₘ - R¹ - (COOR²)ₙ
in der
m und n unabhängig voneinander einen Wert ≥1 annehmen,
R¹ eine Alkylen- oder Alkylidengruppierung mit 1 bis 11 C-Atomen ist,
R² eine Alkylgruppe mit 1 bis 5 C-Atomen oder ein Wasserstoffatom ist,
erhältliches Polyesterpolyol eingesetzt wird.

5. Verfahren gemäß Anspruch 4, bei dem das Schwefelatome aufweisende Polyesterpolyol ein durch Umsetzung von Polyesterpolyolen mit Mercaptoessigsäure erhältliches Polyesterpolyol ist.

6. Verfahren gemäß einem der Ansprüche 2 bis 5, bei dem als olefinisch ungesättigte Monomere Styrol, alpha-Methylstyrol, Ethylstyrol, Vinyltoluol, Divinylbenzol, Isopropylstyrol, Chlorostyrol, Butadien, Isopren, Pentadien, Acrylsäure, Methacrylsäure, Methacrylsäuremethylester, Vinylacetat, Acrylnitril, Methylvinylketon oder Kombinationen daraus eingesetzt werden.

7. Verfahren nach einem der Ansprüche 2 bis 6, bei dem Polycarbonatpolyole eingesetzt werden.

8. Polymerdispersion in Polyesterpolyol, erhältlich gemäß einem der Ansprüche 2 bis 7

9. Verwendung von Polymerdispersionen gemäß Anspruch 1 oder 8 zur Herstellung von Polyurethanen.

10. Schuhsohle enthaltend das Umsetzungsprodukt von Polymerdispersionen gemäß Anspruch 1 oder 8 mit Polyisocyanaten.

## Claims

1. Polymer dispersion in polyester polyol, comprising at least one polyester polyol having sulphur atoms.

2. Process for the production of polymer dispersions by radical polymerization of olefinically unsaturated monomers in the presence of a polyester polyol having sulphur atoms and being free of olefinically unsaturated groups, and optionally of further polyester polyols that are free of olefinically unsaturated groups.

3. Process according to Claim 2, for preparing polymer dispersions in polyester polyols, wherein the polyester polyol having sulphur atoms has sulfhydryl groups (-SH).

4. Process according to Claim 3, wherein use is made, as polyester polyol having sulphur atoms, of a polyester polyol obtainable by reacting polyester polyols with compounds of the formula
(HS)ₘ-R¹-(COOR²)ₙ
in which
m and n independently of one another take on a value ≥ 1,
R¹ is an alkylene or alkylidene moiety having 1 to 11 C atoms,
R² is an alkyl group having 1 to 5 C atoms or is a hydrogen atom.

5. Process according to Claim 4, wherein the polyester polyol having sulphur atoms is a polyester polyol obtainable by reacting polyester polyols with mercaptoacetic acid.

6. Process according to any of Claims 2 to 5, wherein use is made, as olefinically unsaturated monomers, of styrene, alpha-methylstyrene, ethylstyrene, vinyltoluene, divinylbenzene, isopropylstyrene, chlorostyrene, butadiene, isoprene, pentadiene, acrylic acid, methacrylic acid, methyl methacrylate, vinyl acetate, acrylonitrile, methyl vinyl ketone or combinations thereof.

7. Process according to any of Claims 2 to 6, wherein polycarbonate polyols are used.

8. Polymer dispersion in polyester polyol, obtainable according to any of Claims 2 to 7.

9. Use of polymer dispersions according to Claim 1 or 8 for the production of polyurethanes.

10. Footwear sole comprising the reaction product of polymer dispersions according to Claim 1 or 8 with polyisocyanates.

## Revendications

1. Dispersion polymère dans du polyester-polyol contenant au moins un polyester-polyol comportant des atomes de soufre.

2. Procédé de fabrication de dispersions polymères par polymérisation radicalaire de monomères oléfiniquement insaturés en présence d'un polyesterpolyol comportant des atomes de soufre sans groupes oléfiniquement insaturés et éventuellement d'autres polyester-polyols sans groupes oléfiniquement insaturés.

3. Procédé selon la revendication 2, pour la fabrication de dispersions polymères dans des polyester-polyols, dans lequel le polyester-polyol comportant des atomes de soufre comporte des groupes sulfhydryle (-SH).

4. Procédé selon la revendication 3, dans lequel un polyester-polyol pouvant être obtenu par réaction de polyester-polyols avec des composés de formule
(HS)ₘ-R¹-(COOR²)ₙ
dans laquelle
m et n prennent indépendamment l'un de l'autre une valeur ≥ 1,
R¹ est un groupe alkylène ou alkylidène de 1 à 11 atomes C,
R² est un groupe alkyle de 1 à 5 atomes C ou un atome d'hydrogène,
est utilisé en tant que polyester-polyol comportant des atomes de soufre.

5. Procédé selon la revendication 4, dans lequel le polyester-polyol comportant des atomes de soufre est un polyester-polyol pouvant être obtenu par réaction de polyester-polyols avec de l'acide mercaptoacétique.

6. Procédé selon l'une quelconque des revendications 2 à 5, dans lequel le styrène, l'alphaméthylstyrène, l'éthylstyrène, le vinyltoluène, le divinylbenzène, l'isopropylstyrène, le chlorostyrène, le butadiène, l'isoprène, le pentadiène, l'acide acrylique, l'acide méthacrylique, l'ester méthylique de l'acide méthacrylique, l'acétate de vinyle, l'acrylonitrile, la méthylvinylcétone ou leurs combinaisons sont utilisés en tant que monomères oléfiniquement insaturés.

7. Procédé selon l'une quelconque des revendications 2 à 6, dans lequel des polycarbonate-polyols sont utilisés.

8. Dispersion polymère dans du polyester-polyol, pouvant être obtenue selon l'une quelconque des revendications 2 à 7.

9. Utilisation de dispersions polymères selon la revendication 1 ou 8 pour la fabrication de polyuréthanes.

10. Semelles de chaussures contenant le produit de réaction de dispersions polymères selon la
